# EUROPÄISCHE PATENTANMELDUNG

(11) **EP 4 775 531 A1**
(43) Veröffentlichungstag der Anmeldung: **15.07.2026**
(21) Anmeldenummer: 25150612.7
(22) Anmeldetag: 08.01.2025
(51) Int. Cl.: C01B 3/04

(54) **VERFAHREN UND VORRICHTUNG ZUR ERZEUGUNG VON WASSERSTOFF AUS AMMONIAK**

(71) Anmelder: Linde GmbH, 82049 Pullach (DE)
(72) Erfinder: Bohn, Jan-Peter, 82049 Pullach (DE); Reinke, Michael, 82049 Pullach (DE); Behrens, Axel, 82049 Pullach (DE); Taube, Carsten, 82049 Pullach (DE)
(74) Vertreter: Fischer, Werner

(57) **Zusammenfassung**

Die Erfindung betrifft ein Verfahren sowie eine Vorrichtung zur Erzeugung eines wasserstoffhaltigen Produktgases (6), wobei ein Ammoniak enthaltender Einsatzstoff (1) einem Spaltreaktor (S) zugeführt wird, um Ammoniak mit katalytischer Unterstützung thermisch zu spalten und ein Wasserstoff, Stickstoff und Ammoniak umfassendes Spaltgas (3) zu erhalten, das in das wasserstoffhaltige Produktgas (6) sowie ein kohlenstofffreies und Wasserstoff umfassendes Restgas (7) getrennt wird, von dem zumindest ein Teil unter Bildung eines wasserhaltigen Rauchgases (8) verbrannt wird. Kennzeichnend hierbei ist, dass das wasserhaltige Rauchgas (8) bis unter seinen Taupunkt abgekühlt und die dabei freigesetzte Kondensationsenthalpie des Wassers zur Anwärmung zumindest eines bevorzugt verfahrensinternen Stoffstroms genutzt wird.

## Beschreibung

Die Erfindung betrifft ein Verfahren zur Erzeugung eines wasserstoffhaltigen Produktgases, wobei ein Ammoniak enthaltender Einsatzstoff einem Spaltreaktor zugeführt wird, um Ammoniak mit katalytischer Unterstützung thermisch zu spalten und ein Wasserstoff, Stickstoff und Ammoniak umfassendes Spaltgas zu erhalten, das in das wasserstoffhaltige Produktgas sowie ein kohlenstofffreies und Wasserstoff umfassendes Restgas getrennt wird, von dem zumindest ein Teil unter Bildung eines wasserhaltigen Rauchgases verbrannt wird.

Weiterhin betrifft die Erfindung eine Vorrichtung zur Durchführung des erfindungsgemäßen Verfahrens.

Die katalytisch unterstütze thermische Spaltung von Ammoniak ist bekannt und seit vielen Jahren Stand der Technik. Die dabei ablaufende Reaktion

2NH₃ ↔ N₂ + 3H₂

ist endotherm (ΔH=46,2 kJ/mol). Die von dem eingesetzten Katalysatormaterial abhängige Lage des Reaktionsgleichgewichts verschiebt sich mit fallendem Druck und steigender Temperatur zur Produktseite.

Zur industriellen Ammoniakspaltung können ähnliche Anlagen eingesetzt werden, wie sie heute zur großtechnischen Synthesegaserzeugung durch Dampfreformierung von Kohlenwasserstoffen verwendet werden. Derartige Anlagen umfassen einen Spaltreaktor mit einem Feuerraum, in dem mit Katalysatormaterial gefüllte Spaltrohre angeordnet sind, sowie ein Abhitzesystem. Der Feuerraum wird durch einen oder mehrere, mit einem Brennstoff betriebene Brenner beheizt, die Wärme für die endotherm ablaufende Spaltung des durch die Spaltrohre geführten Ammoniaks liefern und nachfolgend im Abhitzesystem gegen anzuwärmende Verfahrensströme weiter abgekühlt werden.

Um das wasserstoffhaltige Produktgas, bei dem es sich beispielsweise um Reinwasserstoff oder Formiergas handeln kann, ohne oder mit nur geringem Verdichtungsaufwand abgeben zu können, wird die Ammoniakspaltung zweckmäßigerweise bei einem Druck (Spaltdruck) durchgeführt, der zwischen 20 und 40 bar liegt. Dies ist umso einfacher möglich, als das für die Spaltung bestimmte Ammoniak gewöhnlich flüssig zur Verfügung steht, so dass sein Druck mit wenig Energieeinsatz erhöht werden kann. Damit unter diesen Bedingungen ein ausreichend hoher, wirtschaftlich sinnvoller Umsetzungsgrad des eingesetzten Ammoniaks erreicht wird, ist es notwendig, die Spaltung bei Temperaturen zwischen ca. 500 und 1000°C durchzuführen.

Das aus dem Spaltreaktor austretende Spaltgas besteht zu einem großen Teil aus Wasserstoff und Stickstoff, enthält daneben aber auch nicht umgesetztes Ammoniak sowie Wasser, das bereits in dem gewöhnlich zur Spaltung eingesetzten Ammoniak (anhydrous ammonia) in einer Konzentration zwischen 0,2 und 0,5Gew.-% vorliegt.

Zur Gewinnung des wasserstoffhaltigen Produktgases werden Ammoniak, Wasser und ggf. Stickstoff aus dem Spaltgas durch einen oder mehrere adsorptive Trennschritte, denen eine Wasserwäsche zur Entfernung von Ammoniak vorangehen kann, abgetrennt, wobei neben dem Produktgas ein kohlenstofffreies, Ammoniak und Wasserstoff enthaltendes Restgas entsteht, das beispielsweise als Brenngas zur Bereitstellung von Wärme für die Ammoniakspaltung verbrannt wird. Dem bei der Verbrennung anfallenden, weitgehend aus Wasser und Stickstoff bestehenden, kohlendioxidfreien Rauchgas wird gewöhnlich in einem Abhitzesystem Wärme entzogen, um sie beispielsweise zur Vorwärmung des Ammoniak enthaltenden Einsatzstoffs zu nutzen, ehe es mit einer deutlich über seinem Taupunkt liegenden Temperatur und einem immer noch beträchtlichen Wärmeinhalt in die Atmosphäre freigesetzt wird.

Aufgabe der Erfindung ist es, ein Verfahren der gattungsgemäßen Art sowie eine Vorrichtung zu dessen Durchführung anzugeben, deren Wirtschaftlichkeit gegenüber dem Stand der Technik verbessert ist.

Die gestellte Aufgabe wird verfahrensseitig erfindungsgemäß dadurch gelöst, dass das wasserhaltige Rauchgas bis unter seinen Taupunkt abgekühlt und die dabei freigesetzte Kondensationsenthalpie des Wassers zur Anwärmung zumindest eines bevorzugt verfahrensinternen Stoffstroms genutzt wird.

Das bei der Restgasverbrennung erzeugte wasserhaltige Rauchgas ist frei von Schwefel und anderen Stoffen, die zusammen Wasser, das bei der Taupunktsunterschreitung auskondensiert, aggressive Verbindungen bilden könnten. Die zur Durchführung der vorgeschlagenen Rauchgasabkühlung einsetzbaren Apparate müssen daher nicht gegenüber aggressiven Verbindungen wie Schwefelsäure unempfindlich sein, und können aus kostengünstigen Materialien gefertigt werden.

Das erfindungsgemäße Verfahren, bei dem das Rauchgas sinnvollerweise bis auf 10°C oder sogar bis auf 5°C abgekühlt wird, ermöglicht es, einen größeren Teil der im Prozess erzeugten Wärme auch prozessintern zu nutzen und so die Wirtschaftlichkeit der Ammoniakspaltung gegenüber dem Stand der Technik zu erhöhen. Es soll aber nicht ausgeschlossen sein, die Wärme des wasserhaltigen Rauchgases auch außerhalb des eigentlichen Prozesses einzusetzen, solange dies mit wirtschaftlichen Vorteilen, beispielsweis in Form einer Gutschrift, verbunden ist. Vorzugsweise soll die Wärme des Rauchgases ausschließlich innerhalb des Prozesses genutzt werden. Beispielsweise kann die Hochtemperaturwärme des Rauchgases zur Ammoniakspaltung eingesetzt werden, wobei ein abgekühltes Rauchgas anfällt, dessen Temperatur noch deutlich über seinem Taupunkt liegt. Um dem abgekühlten Rauchgas weiter Wärme zu entziehen, kann es etwa zur Vorwärmung von einem oder mehreren Einsatzstoffen oder zur Erzeugung elektrischer Energie über einen organischen Rankine-Prozess verwendet werden.

Vorzugsweise wird das bis unter seien Taupunkt abgekühlte Rauchgas, bzw. das bei der Abkühlung erhaltene zweiphasige Stoffgemisch in eine weitgehend aus Stickstoff bestehende, von Kohlenstoff und Kohlenstoffverbindungen freie Gasphase sowie eine Flüssigphase getrennt, die das kondensierte Wasser enthält. Während die Gasphase zweckmäßigerweise in die Atmosphäre freigesetzt wird, kann die Flüssigphase stofflich verwertet werden.

In einer besonders bevorzugten Ausgestaltung des erfindungsgemäßen Verfahrens ist vorgesehen, das Ammoniak und Wasserstoff umfassende Restgas zur Bereitstellung von Wärme für die Ammoniakspaltung zu verbrennen.

Falls die Restgasmenge nicht ausreicht, um durch seine Verbrennung die gesamte für die Ammoniakspaltung benötigte Wärme bereitzustellen, sieht eine weitere Ausgestaltung des erfindungsgemäßen Verfahrens vor, zusätzlich zu dem Restgas einen kohlenstofffreien Brennstoff, wie beispielsweise Ammoniak, zu verbrennen.

Das aus dem Rauchgas flüssig abgeschiedene Wasser ist weitgehend frei von Verunreinigungen und kann daher mit wesentlich geringem Aufwand als etwa natürlich vorkommendes Wasser zu demineralisiertem Wasser, wie es beispielsweise als Einsatz für eine Wasserelektrolyse benötigt wird, aufbereitet werden. Eine bevorzugte Ausgestaltung des erfindungsgemäßen Verfahrens sieht daher vor, zumindest einen Teil des aus dem Rauchgas flüssig abgeschiedenen Wassers zu demineralisiertem Wasser aufzubereiten. Vorzugsweise wird das demineralisierte Wasser gegen Gutschrift an einen externen Verbraucher abgegeben oder es wird in einem Elektrolyseur zur Gewinnung von Wasserstoff eingesetzt, der als weiteres Produkt abgegeben oder dem wasserstoffhaltigen Produktgas zugemischt werden kann.

Zum Erhalt des demineralisierten Wassers wird vorgeschlagen, kondensiertes, aus dem Rauchgas abgeschiedenes Wasser, das auch mit Wasser aus anderen Quellen gemischt werden kann, durch Verdunstung, Membranverdampfung oder Adsorption aufzubereiten. Vorzugsweise wird hierzu Wärme des Rauchgases genutzt.

Alternativ oder zusätzlich kann kondensiertes, aus dem Rauchgas abgeschiedenes Wasser auch ohne Wärmezufuhr beispielsweise durch Entgasung, in einem Membranverfahren oder unter Verwendung eines Ionenaustauschers feingereinigt werden, um es als demineralisiertes Wasser abgeben zu können.

Die zur Durchführung des erfindungsgemäßen Verfahrens geeignete Vorrichtung weist einen Spaltreaktor auf, in dem ein Ammoniak enthaltender Einsatzstoff mit katalytischer Unterstützung thermisch zu einem Wasserstoff, Stickstoff und Ammoniak umfassenden Spaltgas umgesetzt werden kann, eine Trenneinrichtung, in der das Spaltgas in das wasserstoffhaltige Produktgas sowie ein kohlenstofffreies, Ammoniak und Wasserstoff umfassendes Restgas trennbar ist, sowie eine Verbrennungseinrichtung, mit der zumindest ein Teil des Restgases unter Bildung eines wasserhaltigen Rauchgases verbrennbar ist.

Die gestellte Aufgabe wird vorrichtungsseitig erfindungsgemäß dadurch gelöst, dass die Vorrichtung weiterhin eine Einrichtung zur Abkühlung des Rauchgases bis unter seinen Taupunkt umfasst, mit der die Kondensationsenthalpie des Wassers zur Anwärmung zumindest eines bevorzugt verfahrensinternen Stoffstroms genutzt werden kann.

Eine Ausgestaltung der erfindungsgemäßen Vorrichtung umfasst eine Wasseraufbereitung, in der bei der Abkühlung des wasserhaltigen Rauchgases auskondensiertes Wasser zu demineralisiertem, für den Einsatz in einer Wasserelektrolyse geeignetem Wasser aufbereitet werden

Vorzugsweise ist die Wasseraufbereitung mit einer Verdunstungseinrichtung, einem Membranverdampfer oder einem Adsorber ausgeführt und zweckmäßigerweise so eingerichtet, dass aus dem Rauchgas abgetrenntes Wasser, das auch mit Wasser aus anderen Quellen gemischt sein kann, unter Nutzung von Wärme des Rauchgases zu demineralisiertem Wasser aufbereitbar ist.

Alternativ oder zusätzlich kann die erfindungsgemäße Vorrichtung auch mit einer Entgasungseinrichtung, einer Membrantrennung, einem Ionenaustauscher oder einer anderen Einrichtung ausgeführt sein, über die kondensiertes, aus dem Rauchgas abgeschiedenes Wasser auch ohne Wärmezufuhr zu demineralisiertem Wasser aufbereitet werden kann.

In einer bevorzugten Variante der erfindungsgemäßen Vorrichtung ist die Verbrennungseinrichtung zur Beheizung des Spaltreaktors eingerichtet. Beispielsweis kann der Spaltreaktor ähnliche wie eine Anlage ausgeführt sein, wie sie heute zur großtechnischen Synthesegaserzeugung durch Dampfreformierung von Kohlenwasserstoffen verwendet wird, wobei die Verbrennungseinrichtung zumindest einen im Feuerraum des Spaltreaktors angeordneten Brenner umfasst.

Um aus dem im Spaltreaktor erhältlichen Spaltgas das wasserstoffhaltige Produktgas gewinnen zu können, ist die Trenneinrichtung der erfindungsgemäßen Vorrichtung vorzugsweise mit einem Druckwechseladsorber ausgeführt.

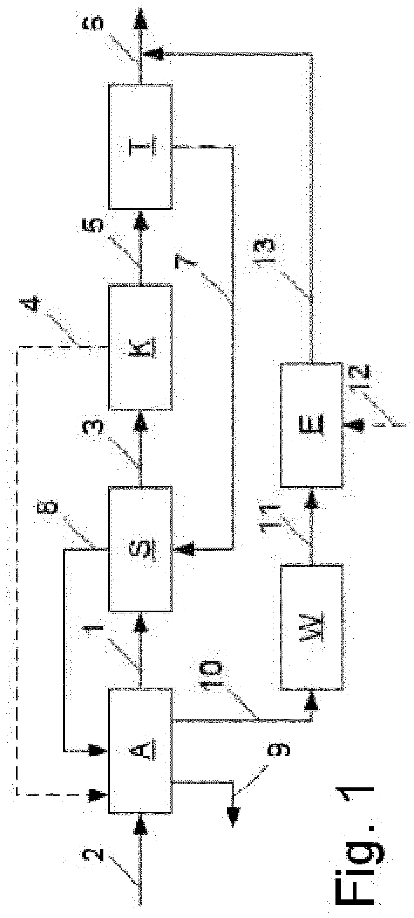

Im Folgenden soll die Erfindung anhand eines in der Figur 1 schematisch dargestellten Ausführungsbeispiels näher erläutert werden.

Die Figur 1 zeigt eine bevorzugte Ausführung der Erfindung mit einem brennerbeheizten Spaltreaktor.

Um zu einem gasförmigen, Ammoniak enthaltenden Einsatzstoff 1 für den Spaltreaktor S aufbereitet zu werden, wird flüssiges Ammoniak 2 der Einsatzaufbereitung A zugeführt, wo es verdampft, überhitzt und ggf. einer Vorspaltung unterzogen wird. Im brennerbeheizten Spaltreaktor S wird der größte Teil des im Ammoniak enthaltenden Einsatz 1 vorliegenden Ammoniaks mit katalytischer Unterstützung bei Spalttemperauren bis zu 1000°C in Wasserstoff und Stickstoff gespalten, so dass ein heißes, weitgehend aus Wasserstoff und Stickstoff bestehendes und Reste von Ammoniak enthaltendes Spaltgas 3 erhalten wird. In der Kühleinrichtung K wird dem heißen Spaltgas 3 Wärme 4 entzogen, wobei ein abgekühltes Spaltgas 5 entsteht, das in der Trenneinrichtung T, die beispielsweise einen Druckwechseladsorber umfasst, in das wasserstoffhaltige Produktgas 6 sowie ein Restgas 7 getrennt wird, das die brennbaren Substanzen Wasserstoff und Ammoniak sowie ggf. Wasser enthält. Das Restgas 7 wird zur Beheizung des Spaltreaktors S verbrannt, wobei ein wasserhaltiges Rauchgas 8 entsteht, das insbesondere frei von Kohledioxid und anderen Sauergasen ist. Das wasserhaltige Rauchgas 8 wird der Einsatztaufbereitung A zugeführt, wo seine Wärme zusammen mit der aus der Kühleinrichtung K abgeführten Wärme 4 zur Aufbereitung des flüssigen Ammoniaks 2 eingesetzt wird. Hierbei wird das wasserhaltige Rauchgas 8 bis unter den Wassertaupunkt abgekühlt, so dass ein zweiphasiges Stoffgemisch entsteht, das in eine weitgehend aus Stickstoff bestehende Gasphase 9 sowie flüssiges Wasser 10 getrennt wird. Während die Gasphase 9 in die Atmosphäre freigesetzt wird, wird das weitgehend von Verunreinigungen freie Wasser 10 der Wasseraufbereitung W zugeführt und dort mit vergleichsweise geringem Aufwand beispielsweise durch Membranverdampfung und unter Nutzung von Wärme des Rauchgases 8 zu demineralisiertem, für den Einsatz in der Wasserelektrolyse E geeignetem Wasser 11 aufbereitet. Mit Hilfe von elektrischem Strom 12 wird in der Wasserelektrolyse E Wasserstoff 13 aus dem demineralisierten Wasser 11 abgetrennt, der zur Erhöhung der Ausbeute des Verfahrens dem wasserstoffhaltigen Produktstrom 6 zugeführt wird.

## Patentansprüche

1. Verfahren zur Erzeugung eines wasserstoffhaltigen Produktgases (6), wobei ein Ammoniak enthaltender Einsatzstoff (1) einem Spaltreaktor (S) zugeführt wird, um Ammoniak mit katalytischer Unterstützung thermisch zu spalten und ein Wasserstoff, Stickstoff und Ammoniak umfassendes Spaltgas (3) zu erhalten, das in das wasserstoffhaltige Produktgas (6) sowie ein kohlenstofffreies und Wasserstoff umfassendes Restgas (7) getrennt wird, von dem zumindest ein Teil unter Bildung eines wasserhaltigen Rauchgases (8) verbrannt wird, **dadurch gekennzeichnet, dass** das wasserhaltige Rauchgas (8) bis unter seinen Taupunkt abgekühlt und die dabei freigesetzte Kondensationsenthalpie des Wassers zur Anwärmung zumindest eines bevorzugt verfahrensinternen Stoffstroms genutzt wird.

2. Verfahren nach Anspruch 1, **dadurch gekennzeichnet, dass** das bis unter seinen Taupunkt abgekühlte Rauchgas in eine weitgehend aus Stickstoff bestehende Gasphase (9) sowie kondensiertes Wasser (10) getrennt wird, von dem nachfolgend zumindest ein Teil zu demineralisiertem, für den Einsatz in einer Wasserelektrolyse (E) geeignetem Wasser (11) aufbereitet wird.

3. Verfahren nach Anspruch 2, **dadurch gekennzeichnet, dass** kondensiertes, aus dem Rauchgas abgetrenntes Wasser (10) durch Verdunstung oder Membranverdampfung oder Adsorption zu demineralisiertem Wasser (11) aufbereitet wird.

4. Verfahren nach einem der Ansprüche 2 oder 3, **dadurch gekennzeichnet, dass** kondensiertes, aus dem Rauchgas abgetrenntes Wasser (10) unter Nutzung von Wärme des Rauchgases (8) zu demineralisiertem Wasser (11) aufbereitet wird.

5. Verfahren nach einem der Ansprüche 1 bis 4, **dadurch gekennzeichnet, dass** zumindest ein Teil des Ammoniak und Wasserstoff umfassenden Restgases (7) zur Bereitstellung von Wärme für die Ammoniakspaltung (S) verbrannt wird.

6. Verfahren nach einem der Ansprüche 1 bis 5, **dadurch gekennzeichnet, dass** das Spaltgas (3) durch Druckwechseladsorption (T) getrennt wird.

7. Vorrichtung zur Erzeugung eines wasserstoffhaltigen Produktgases (6), mit einem Spaltreaktor (S), in dem ein Ammoniak enthaltender Einsatzstoff (1) mit katalytischer Unterstützung thermisch zu einem Wasserstoff, Stickstoff und Ammoniak umfassenden Spaltgas (3) umgesetzt werden kann, eine Trenneinrichtung (T), in der das Spaltgas in das wasserstoffhaltige Produktgas (6) sowie ein kohlenstofffreies, Ammoniak und Wasserstoff umfassendes Restgas (7) trennbar ist, sowie eine Verbrennungseinrichtung, mit der zumindest ein Teil des Restgases (7) unter Bildung eines wasserhaltigen Rauchgases (8) verbrennbar ist, **dadurch gekennzeichnet, dass** die Vorrichtung weiterhin eine Einrichtung zur Abkühlung des Rauchgases (8) bis unter seinen Taupunkt umfasst, mit der die Kondensationsenthalpie des Wassers zur Anwärmung zumindest eines bevorzugt verfahrensinternen Stoffstroms genutzt werden kann.

8. Vorrichtung nach Anspruch 7, **dadurch gekennzeichnet, dass** sie eine Wasseraufbereitung (W) umfasst, in der bei der Abkühlung deswasserhaltigen Rauchgases (8) auskondensiertes Wasser (10) zu demineralisiertem, für den Einsatz in einer Wasserelektrolyse (E) geeignetem Wasser (11) aufbereitet werden kann.

9. Vorrichtung nach Anspruch 8, **dadurch gekennzeichnet, dass** die Wasseraufbereitung (W) mit einer Verdunstungseinrichtung oder einem Membranverdampfer oder einem Adsorber ausgeführt ist.

10. Vorrichtung nach einem der Ansprüche 8 oder 9, **dadurch gekennzeichnet, dass** die Wasseraufbereitung (W) dazu eingerichtet ist, aus dem Rauchgas (8) abgetrenntes Wasser (10) unter Nutzung von Wärme des Rauchgases (8) zu demineralisiertem Wasser (11) aufzubereiten.

11. Vorrichtung nach einem der Ansprüche 7 bis 10, **dadurch gekennzeichnet, dass** die Verbrennungseinrichtung zur Beheizung des Spaltreaktors (S) eingerichtet ist.

12. Vorrichtung nach einem der Ansprüche 7 bis 11, **dadurch gekennzeichnet, dass** die Trenneinrichtung (T) einen Druckwechseladsorber umfasst.
